# EUROPÄISCHE PATENTSCHRIFT

(11) **EP 3 566 775 B1**
(45) Veröffentlichungstag und Bekanntmachung des Hinweises auf die Patenterteilung: **02.12.2020**
(21) Anmeldenummer: 19172681.9
(22) Anmeldetag: 06.05.2019
(51) Int. Cl.: B01L 3/00, B01L 9/00, G01N 1/00, G01N 1/06, G01N 1/36, G01N 1/31, G01N 35/04

(54) **KASSETTENSTAPEL AUS EINZELNEN KASSETTEN, VORZUGSWEISE ZUR AUFNAHME VON PRÄPARATEN FÜR LABORANALYSEN**
CASSETTE STACK MADE OF INDIVIDUAL CASSETTES, PREFERABLY TO RECEIVE OF PREPARATIONS FOR LABORATORY ANALYSES
PILE DE CASSETTES COMPOSÉE DE CASSETTES INDIVIDUELLES, DE PRÉFÉRENCE DESTINÉE À LA RÉCEPTION DES PRÉPARATIONS POUR ANALYSES DE LABORATOIRE

(30) Priorität: 08.05.2018 DE 202018102561 U
(43) Veröffentlichungstag der Anmeldung: 13.11.2019
(73) Patentinhaber: KABE-Labortechnik GmbH, 51588 Nümbrecht-Elsenroth (DE)
(72) Erfinder: Kötter Frank, 51588 Nümbrecht (DE)
(74) Vertreter: Christophersen Patentanwälte

(56) Entgegenhaltungen:
- EP-A1- 2 881 175
- DE-T2- 69 117 227
- US-A1- 2013 224 088

## Beschreibung

Die vorliegende Erfindung betrifft einen Kassettenstapel aus einzelnen Kassetten, vorzugsweise zur Aufnahme von Präparaten für Laboranalysen, wobei die einzelnen Kassetten jeweils einen rechteckigen Boden und vier Seitenwände aufweisen, von denen eine Seitenwand eine Doppelwand ist und ein bedruckbares Beschriftungsfeld aufweist. Alle Kassetten sind mit einer Öffnung versehen, durch die ein gemeinsamer Strang hindurchführt, um die Kassetten in Stapelform zusammenzuhalten. Die Öffnung ist zwischen einer Innenwand und einer das bedruckbare Beschriftungsfeld aufweisenden Außenwand der Doppelwand ausgebildet, wobei der Strang unter der untersten Kassette des Kassettenstapels ein Widerstandselement aufweist.

Aus der EP 1 238 706 A2 geht ein Kassettenstapel aus einzelnen, lösbar miteinander verbundenen Kunststoff-Kassetten hervor, die zum Bearbeiten von histologischen Präparaten für eine nachfolgende Schnittpräparation vorgesehen sind, wobei der Kassettenstapel in ein Stapelmagazin eines Drucksystems einbringbar ist. Die einzelnen Kassetten sind entweder über mindestens ein Klebeband und/oder über mindestens eine Schweißnaht miteinander verbunden.

Ferner ist aus der US 2013/0224088 A1 eine histologische Probenkassette bekannt, die eine Basis umfasst, welche ein Fach definiert. Darüber hinaus umfasst die Probenkassette einen Deckel sowie ein Gelenk, das den Deckel mit der Basis verbindet und es dem Deckel ermöglicht, sich zwischen einer offenen Position und einer geschlossenen Position in Bezug auf die Basis zu bewegen. Der Deckel und die Basis sind ausgebildet, um einen Drehpunkt zu bilden und eine ausreichende Spannung auf das Gelenk aufzubringen, sowie um das Gelenk zu brechen, wenn der Deckel von der offenen Position in die geschlossene Position bewegt wird.

Ein gattungsgemäßer Kassettenstapel ist aus der EP 2 881 175 B1 bekannt, wobei der Kassettenstapel aus einzelnen Kassetten zur Aufnahme von Präparaten für Laboranalysen besteht. Die Kassetten werden über einen gemeinsamen Strang in Stapelform zusammengehalten, wobei alle Kassetten dazu mit einer Öffnung versehen sind, durch die der gemeinsame Strang hindurchführt. Die Kassetten sind im Kassettenstapel entweder ohne einen Deckel angeordnet, wobei der Deckel später nachträglich an der Kassette angebracht werden kann. Alternativ sind die Kassetten mit geöffnetem Deckel im Kassettenstapel angeordnet, wobei wiederum die einzelne Kassette nachträglich verschlossen werden kann. Die Öffnung ist im Bereich einer ein bedruckbares Beschriftungsfeld aufweisenden Seitenwand angeordnet, wobei diese Seitenwand eine Doppelwand ist, die sich zusammensetzt aus einer Außenwand und einer Innenwand. Die Öffnung befindet sich zwischen der Innen- und Außenwand und sie ist zugleich Teil der Verrastung beim Verschließen der Kassette mittels ihres Deckels. Die Öffnung weist daher eine Doppelfunktion auf.

Der Erfindung liegt die Aufgabe zugrunde, einen Kassettenstapel der vorgenannten Art dahingehend weiterzuentwickeln, dass die Handhabung des Kassettenstapels, insbesondere im Rahmen der Arbeitsvorbereitung in einem Laborbetrieb verbessert wird. Die Aufgabe wird gelöst durch jeden der Gegenstände der Patentansprüche 1, 9 und 17. Bevorzugte Ausführungsformen sind den jeweiligen abhängigen Ansprüchen zu entnehmen.

Ein erster erfindungsgemäßer Kassettenstapel weist mehrere einzelne Kassetten, vorzugsweise zur Aufnahme von Präparaten für Laboranalysen auf, wobei die einzelnen Kassetten jeweils einen rechteckigen Boden und vier Seitenwände aufweisen, von denen eine erste Seitenwand eine Doppelwand ist und ein bedruckbares Beschriftungsfeld aufweist, wobei alle Kassetten mit einer ersten Öffnung versehen sind, durch die ein gemeinsamer Strang hindurchführt, um die Kassetten in Stapelform zusammenzuhalten, wobei die erste Öffnung zwischen einer Innenwand und einer das bedruckbare Beschriftungsfeld aufweisenden Außenwand der Doppelwand ausgebildet ist, und wobei der Strang unter der untersten Kassette des Kassettenstapels ein Widerstandselement aufweist. Zwischen der Innenwand und der Außenwand der Doppelwand sind eine zweite und eine dritte Öffnung ausgebildet, die jeweils eine an einem die Kassette nach oben verschließenden Deckel angeformte Lasche aufnehmen, und die jeweilige Lasche bei einer Schwenkbewegung des Deckels führen. An der der Doppelwand gegenüberliegenden zweiten Seitenwand ist ein Rastabschnitt ausgebildet, und an dem Deckel ist ein Rastelement ausgebildet, welches am Rastabschnitt zur formschlüssigen Verbindung des Deckels mit der Kassette zur Anlage kommt.

Eine solche Ausgestaltung des Kassettenstapels kann zur Verbesserung von dessen Handhabung beitragen, indem die Möglichkeit geschaffen wird, dass der die Kassetten des Kassettenstapels zusammenhaltende Strang insbesondere bei geschlossenen Kassetten durch deren erste Öffnungen hindurchgeführt werden kann bzw. hindurchführt.

Trotzdem ist es möglich, beim Einführen des Kassettenstapels in beispielsweise einen Druckerschacht oder ein Kassettenmagazin den gesamten Kassettenstapel nur an dem gemeinsamen Strang zu halten und zu tragen. Dabei ist der Strang beispielsweise ein aus einem Kunststoff bestehendes Flachband oder ein herkömmliches Paketband. Eine weitergehende Verbindung jeder einzelnen Kassette mit dem Strang, beispielsweise durch Klebekräfte oder durch einzelne Schweißpunkte, ist somit nicht notwendig und vor allem nicht sinnvoll. Insbesondere erfolgt in Stranglängsrichtung keine Befestigung der einzelnen Kassetten an dem Strang.

Es wird ferner die Möglichkeit geschaffen, direkt nach dem Einführen des Kassettenstapels in den Schacht und ohne den Kassettenstapel umgreifen zu müssen, lediglich durch ein verstärktes Ziehen an dem Strang nach oben und unter gleichzeitiger Ausübung von Gegendruck auf die oberste Kassette, beispielweise mit der anderen Hand, den Strang nach oben aus den Öffnungen oder Aussparungen sämtlicher Kassetten herauszuziehen. Mit einer einzigen Bewegung, dem Herausziehen des Strangs, liegen somit die Kassetten unverzüglich vereinzelt im Druckerschacht oder im Kassettenmagazin vor und können einzeln bzw. separat weiter verwendet werden.

Das Widerstandselement, das unter der untersten Kassette des Kassettenstapels ausgebildet ist, ist bevorzugt ein Querelement am unteren Ende des Strangs. Durch das Querelement wird verhindert, dass der Strang bereits bei dem Versuch, den Kassettenstapel zu tragen oder anzuheben, aus den ersten Öffnungen der Kassetten herausgezogen wird. Das Widerstandselement ist beispielsweise ein gegenüber dem übrigen Strangverlauf verformter oder abgewinkelter Endabschnitt des Stranges, wobei somit kein zusätzliches Bauteil benötigt wird. Das Widerstandselement verläuft im Wesentlichen senkrecht zur sonstigen durch die ersten Öffnungen der Kassetten hindurchgeführten Stranglängsrichtung. Damit sämtliche Kassetten des Kassettenstapels über einen einzigen Strang anhebbar sind, ist der abgewinkelte Endabschnitt vorzugsweise gegen die Unterseite der untersten Kassette des Kassettenstapels abgestützt.

Die erste Öffnung jeder Kassette, durch die der Strang hindurchgeführt ist, sowie die zweite und dritte Öffnung werden durch den Zwischenraum zwischen der Innenwand und der Außenwand der Doppelwand gebildet. Bevorzugt ist die erste Öffnung zwischen der zweiten und dritten Öffnung ausgebildet, wobei die Größe der ersten Öffnung abhängig ist von der Geometrie des Stranges und die Größe der zweiten und dritten Öffnung abhängig sind von der Geometrie der Laschen des Deckels. Anders gesagt sind die erste, zweite und dritte Öffnung jeweils als Durchgangsöffnung oder Ausnehmung ausgebildet. Die erste Öffnung weist einen länglichen oder schlitzförmigen Querschnitt auf, wobei die zweite und dritte Öffnung einen quadratischen oder rechteckigen Querschnitt aufweisen und im Wesentlichen gleich groß ausgebildet sind. Mithin sind die Laschen ebenfalls gleich groß bzw. mit im Wesentlichen gleichen Abmessungen ausgebildet.

Bevorzugt sind alle Kassetten durch ihren jeweiligen Deckel verschlossen im Kassettenstapel angeordnet. Vorteilhaft dabei ist, dass die Handhabung insbesondere im Rahmen der Arbeitsvorbereitung, bevorzugt beim Einführen des Kassettenstapels in den Druckerschaft oder das Kassettenmagazin vereinfacht wird. Ferner ist der Innenraum jeder einzelnen Kassette im Vergleich zu den bereits bekannten Kassettenstapeln insbesondere vor Verunreinigungen geschützt.

Alternativ ist es aber auch möglich, die Kassetten ohne geschlossenen Deckel im Kassettenstapel anzuordnen, wobei die Kassette erst nach einem Bedrucken und anschließendem Entnehmen der Kassette aus dem Druckerschacht oder dem Kassettenmagazin mit dem Deckel verschlossen werden.

Vorzugsweise ist an der Außenwand der Doppelwand eine zur jeweiligen Lasche korrespondierend gestaltete Gleitfläche ausgebildet. Bevorzugt weisen die beiden Laschen und die dazugehörigen Gleitflächen eine korrespondierende Bogenkontur auf. Dadurch ist es möglich, den Deckel in einer Schwenkbewegung gleichmäßig zu führen. Mit anderen Worten kann der Deckel zwischen einer im Wesentlichen horizontalen Position, nämlich im geschlossenen Zustand der Kassette, und einer im Wesentlichen vertikalen Position relativ zur Kassette beliebig verschwenkt werden, wobei der Deckel während der Schwenkbewegung durch die äußere Kontur der Laschen sowie der korrespondierenden Form der Gleitflächen bogenförmig geführt ist. Mithin wirken die Laschen zusammen mit den Gleitflächen wie ein Scharnier und der Deckel ist insbesondere im geschlossenen Zustand der Kassette gegen ein vertikales Anheben gesichert.

Wird der Deckel nach Entnehmen der Kassette aus dem Druckerschaft an der Kassette angebracht, so ist der Deckel mit dessen Laschen durch die Gleitflächen an der Kassette geführt, sodass ein Verschließen der Kassette intuitiv erfolgen kann.

Der Deckel ist von der Kassette lösbar ausgebildet. Mit anderen Worten sind die Laschen nicht fest an der Kassette angeordnet, sondern lediglich an den Gleitflächen der Außenwand geführt. Ein Lösen des Deckels von der Kassette erfolgt vorzugsweise in einem Winkelbereich zwischen 50° und 90° des Deckels relativ zur Längsachse der Kassette. Der erforderliche Verschwenkwinkel, ab dem der Deckel von der Kassette gelöst werden kann, ist abhängig von der Länge der bogenförmigen Laschen und der Querschnittsgröße der zweiten bzw. dritten Öffnung. Je kürzer die Laschen des Deckels ausgebildet sind, desto geringer ist der erforderliche Verschwenkwinkel, ab dem der Deckel von der Kassette abgenommen werden kann. Bei einer solchen Ausgestaltung der Kassette ist es von Vorteil, dass das Öffnen an der dem Beschriftungsfeld gegenüberliegenden Seite der Kassette erfolgt. Dadurch ragen keine Elemente des Deckels, wie beispielsweise Öffnungslaschen, über das Beschriftungsfeld hinaus, sodass eine optimale und vollflächige Nutzung des Beschriftungsfelds, insbesondere während eines Druckvorgangs möglich ist.

Die Erfindung schließt die technische Lehre ein, dass das Rastelement eine Rastkontur aufweist, die an einem Hinterschnitt des Rastabschnitts zur Anlage kommt. Zunächst liegt die Kassette verschlossen durch den Deckel im Kassettenstapel vor. Einerseits ist der Deckel im Bereich der Doppelwand durch die Laschen geführt, wobei der Deckel andererseits formschlüssig mit der Kassette verbunden ist. Der Deckel ist ergänzend auch kraftschlüssig mit der Kassette verbindbar. Vorzugsweise liegt zwischen dem Deckel und der Kassette eine form- und kraftschlüssige Verbindung vor, um einen sicheren Verschluss der Kassette zu gewährleisten. Diese form- und kraftschlüssige Verbindung zwischen dem Deckel und der Kassette ist durch eine mittelbare manuelle Betätigung des Rastelements lösbar, um die Kassette zur Aufnahme von Präparaten für Laboranalysen zu öffnen. Ferner ist die Kassette durch das am Deckel angeordnete Rastelement wiederverschließbar ausgebildet. Mit anderen Worten kann die Kassette beliebig oft geöffnet und wieder verschlossen werden.

Das Rastelement ist bevorzugt mit einem quer zur Längsrichtung des Deckels ausgerichteten Bügel verbunden, der beiderends durch einen ersten und zweiten materialverjüngten Übergangsabschnitt mit dem Deckel verbunden ist. Anders gesagt erstreckt sich der Bügel an einer der zweiten Seitenwand zugewandten Außenkante des Deckels quer zur Längsrichtung des Deckels und ist an beiden Enden über die materialverjüngten Übergangsabschnitte mit dem Deckel verbunden. Durch die Übergangsabschnitte kann der Bügel durch eine manuelle Betätigung in Richtung der Doppelwand horizontal verlagert werden, um durch eine damit einhergehende elastische Verformung der Übergangsabschnitte die form- und kraftschlüssige Verbindung zwischen dem Deckel und der Kassette zu lösen. Dabei tritt das Rastelement im Wesentlichen horizontal aus dem Hinterschnitt heraus und löst die Verbindung zwischen dem Deckel und der Kassette. Mit anderen Worten weisen die beiden Übergangsabschnitte einen Federeffekt auf, der eine horizontale Verlagerung sowie eine selbsttätige Rückstellung des Bügels ermöglicht. Dazu ist zwischen dem Bügel und dem Deckel eine Aussparung ausgebildet, die durch den Bügel, den Deckel und die beiden Übergangsabschnitte im Wesentlichen in einer horizontalen Ebene räumlich begrenzt ist. Das Rastelement ist vorzugsweise aussparungsseitig mittig am Bügel angeordnet ist. Somit ist der Bügel als Öffnungslasche zum Öffnen des Deckels vorgesehen.

Vorteilhafterweise erfolgt die manuelle Betätigung des Bügels mit zumindest einer horizontalen Kraftkomponente, wobei ferner auch eine vertikale Kraftkomponente vorgesehen sein kann, sodass der Bügel im Wesentlichen schräg nach oben betätigt wird. Je nach Ausgestaltung des Bügels und der Übergangsabschnitte erfolgt bei der manuellen Betätigung ferner ein geringfügiges Verdrehen der materialverjüngten Übergangsabschnitte des Bügels, sodass damit einhergehend eine Verdrehung des Bügels sowie des Rastelements erfolgt.

Vorzugsweise ist an der der Doppelwand gegenüberliegenden zweiten Seitenwand eine Rastöffnung ausgebildet, die das Rastelement mit der Rastkontur im geschlossenen Zustand der Kassette aufnimmt bzw. durch die das Rastelement hindurchgeführt ist. Im geschlossenen Zustand der Kassette ragt das Rastelement des Deckels in die Rastöffnung hinein und bildet die zumindest formschlüssige Verbindung zwischen dem Deckel und der Kassette.

Die Rastöffnung ist bevorzugt breiter ausgebildet als die breiteste Stelle des Rastelements und/oder der Rastkontur, sodass zum einen ein ungehindertes Ein- und Austreten des Rastelements in bzw. aus der Rastöffnung möglich ist, sowie zum anderen eine ungehinderte Verformung des Bügels mit der damit einhergehenden horizontalen Verlagerung des Rastelements zum Lösen der form- und kraftschlüssigen Verbindung möglich ist. Somit ist im geschlossenen Zustand des Deckels zwischen dem Rastelement und dem Deckel ein Spalt ausgebildet.

Ergänzend ist denkbar, an derjenigen Seite des Bügels, an der die manuelle, horizontale bzw. seitliche oder schräge Betätigung des Rastelements erfolgt, eine rampenförmige Kontur an der Unterseite des Bügels und/oder an der Oberseite der Kassette auszubilden. Dabei gleitet der Bügel mit der rampenförmigen Kontur während der Betätigung über die Kassette, wodurch ein vertikales Anheben des Deckels von der zweiten Seitenwand und somit die Schwenkbewegung des Deckels initiiert wird.

Bei einem anderen, ebenfalls erfindungsgemäßen Kassettenstapel ist jede Kassette im Bereich der ersten Innenwand mit zumindest einer zweiten Öffnung versehen, wobei an der ersten Innenwand oder der Außenwand der Doppelwand ein Rastabschnitt ausgebildet ist, und wobei ein zum Verschließen der Kassette geeigneter Deckel vorgesehen ist, an dem ein Rastelement ausgebildet ist, das in der zweiten Öffnung aufgenommen ist und an dem Rastabschnitt zur formschlüssigen Verbindung des Deckels mit der Kassette zur Anlage kommt.

Im geschlossenen Zustand der Kassette liegt die formschlüssige Verbindung zwischen dem Deckel und der Kassette anders gesagt im Bereich der Doppelwand vor.

Auch diese weitere erfindungsgemäße Ausführungsform des Kassettenstapels schafft die Voraussetzung dafür, dass der die Kassetten des Kassettenstapels zusammenhaltende Strang bei vollständig geschlossenen Kassetten durch deren erste Öffnungen hindurchgeführt werden kann bzw. hindurchführt. Jedoch lässt sich der Strang alternativ auch bei geöffnetem oder bei gänzlich fehlendem Deckel durch die ersten Öffnungen der Kassette hindurchführen.

An der der Doppelwand gegenüberliegenden zweiten Seitenwand ist vorzugsweise ein Scharnier oder ein Gelenk ausgebildet, um den Deckel drehbar an der Kassette zu lagern. Das Scharnier kann derart ausgebildet sein, dass der Deckel von der Kassette lösbar ist.

Vorzugsweise weist das Rastelement eine Rastkontur auf, die an einem Hinterschnitt des Rastabschnitts zur Anlage kommt. Dabei liegt im geschlossenen Zustand der Kassette die formschlüssige Verbindung zwischen dem Deckel und der Kassette vor, wobei ein vertikales Anheben des Deckels verhindert wird.

Bevorzugt sind die Kassetten jeweils durch einen jeweiligen Deckel verschlossen im Kassettenstapel angeordnet. Dies erfolgt analog zu der in der ersten Ausführungsform beschriebenen Art und Weise.

Der jeweilige Rastabschnitt ist entweder an der Innenwand oder an der Außenwand der Doppelwand ausgebildet. Ist der jeweilige Rastabschnitt an der Außenwand ausgebildet, überragt der Deckel im geschlossenen Zustand der Kassette die Innenwand, wobei das jeweilige Rastelement zwischen der Innen- und Außenwand hindurchgeführt ist. Die zweite Öffnung weist je eine größere Breite auf, als die breiteste Stelle des Rastelements und/oder der Rastkontur, sodass analog zu den zuvor beschriebenen Ausführungsbeispielen ein ungehindertes Ein-und Austreten des Rastelements in bzw. aus der zweiten Öffnung möglich ist.

Bevorzugt umfasst die Kassette ferner eine dritte Öffnung, die analog zur zweiten Öffnung ausgebildet ist, wobei die erste Öffnung zwischen der zweiten und dritten Öffnung angeordnet ist, wobei am Deckel ein weiteres Rastelement ausgebildet ist, welches im Bereich der dritten Öffnung an einem weiteren Rastabschnitt zur formschlüssigen Verbindung des Deckels mit der Kassette zur Anlage kommt. Die zweite und dritte Öffnung können dabei jeweils als Aussparung oder als Durchbruch zwischen der ersten Innenwand und der Außenwand ausgebildet sein, um das erste bzw. das weitere Rastelement aufzunehmen. Die Rastabschnitte sind bevorzugt an der der ersten Innenwand zugewandten Seite der Außenwand ausgebildet.

Bei einer weiteren Ausführungsform ist der Rastabschnitt an einer der Außenwand abgewandten Seite der ersten Innenwand ausgebildet. Dazu weist die Kassette einwärts der Doppelwand eine weitere Innenwand auf, wobei die erste Innenwand zwischen der Außenwand und der weiteren Innenwand angeordnet ist, und wobei die zweite Öffnung zur Aufnahme des jeweiligen Rastelements zwischen der ersten und der weiteren Innenwand ausgebildet ist. Die zweite Öffnung ist in diesem Fall schlitzförmig oder länglich ausgebildet, um das Rastelement mit der Rastkontur nach der zuvor beschriebenen Art und Weise aufzunehmen. Mithin ist die zweite Öffnung breiter ausgebildet als die breiteste Stelle des Rastelements und/oder der Rastkontur.

Auch diese weitere Ausführungsform des Kassettenstapels schafft die Voraussetzung dafür, dass der die Kassetten des Kassettenstapels zusammenhaltende Strang bei vollständig geschlossenen Kassetten durch deren erste Öffnungen hindurchgeführt werden kann bzw. hindurchführt. Jedoch lässt sich der Strang alternativ auch bei geöffnetem oder bei gänzlich fehlendem Deckel durch die ersten Öffnungen der Kassette hindurchführen.

Vorzugsweise weist die Innenwand an ihrer der Außenwand abgewandten Seite zumindest einen Rastabschnitt auf, an dem ein am Deckel ausgebildetes Rastelement zur Anlage kommt, um den Deckel formschlüssig mit der Kassette zu verbinden.

Somit ist bei dieser Ausführungsform lediglich eine einzige Öffnung an der Kassette ausgebildet, die lediglich zur Aufnahme des Stranges dient. Das Rastelement ist vorzugsweise axial versetzt am Deckel ausgebildet, sodass der Deckel im geschlossenen Zustand der Kassette zum einen mit dessen Unterseite auf der Oberseite der Innenwand zur Anlage kommt und gleichzeitig durch das Rastelement formschlüssig mit der Kassette verbunden ist. Dabei hintergreift vorzugsweise eine Rastkontur des Rastelements den Rastabschnitt der Innenwand. Dadurch sind keine zusätzlichen konstruktiven Maßnahmen, beispielsweise in Form von weiteren Öffnungen oder Aussparungen an der Kassette zu treffen, um das Rastelement oder weitere Rastelemente aufzunehmen und zu verrasten.

Die Kassetten können also jeweils durch ihren Deckel verschlossen im Kassettenstapel angeordnet sein.

Weitere die Erfindung verbessernde Maßnahmen werden nachstehend gemeinsam mit der Beschreibung von vier bevorzugten Ausführungsbeispielen der Erfindung anhand der Figuren näher dargestellt. Dabei zeigt
- Figur 1: eine Perspektivdarstellung eines erfindungsgemäßen Kassettenstapels gemäß einer ersten Ausführungsform,
- Figur 2: eine perspektivische Ansicht auf die Unterseite des Kassettenstapels gemäß Figur 1,
- Figur 3a: eine perspektivische Darstellung einer einzelnen Kassette des Kassettenstapeis der Figuren 1 und 2,
- Figur 3b: eine Längsschnittdarstellung der Kassette gemäß Figur 3a,
- Figur 3c: eine Schnittdarstellung eines Rastmechanismus der Kassette gemäß den Figuren 3a und 3b,
- Figur 3d: eine Schnittdarstellung einer im Vergleich zu Fig. 3c alternativen Einzelheit bei einer zweiten Ausführungsform des Deckels,
- Figur 3e: eine Schnittdarstellung eines Führungsmechanismus der Kassette nach den Figuren 3a und 3b,
- Figur 4a: eine perspektivische Darstellung einer Kassette des Kassettenstapels gemäß einer dritten Ausführungsform,
- Figur 4b: eine Längsschnittdarstellung der Kassette nach Figur 4a,
- Figur 4c: eine Schnittdarstellung eines Rastmechanismus der Kassette nach den Figuren 4a und 4b,
- Figur 5a: eine perspektivische Darstellung einer Kassette des Kassettenstapels gemäß einer vierten Ausführungsform,
- Figur 5b: eine Längsschnittdarstellung der Kassette nach Figur 5a,
- Figur 5c: eine Schnittdarstellung eines Rastmechanismus der Kassette nach den Figuren 5a und 5b,
- Figur 6a: eine perspektivische Darstellung einer Kassette des Kassettenstapels gemäß einer fünften Ausführungsform,
- Figur 6b: eine Längsschnittdarstellung der Kassette nach Figur 6a, und
- Figur 6c: eine Schnittdarstellung eines Rastmechanismus der Kassette nach den Figuren 6a und 6b.

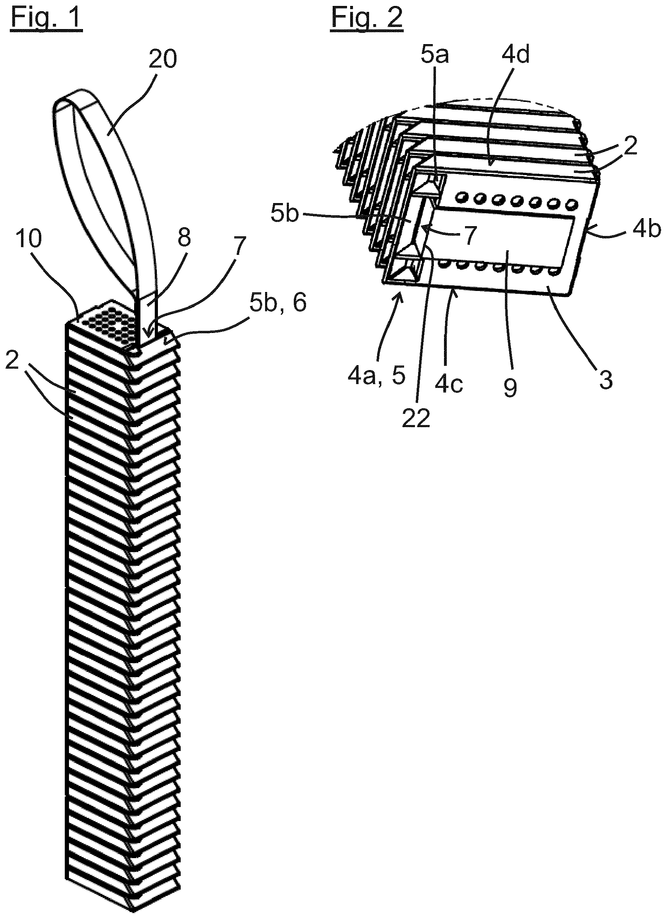

In Figur 1 ist ein Kassettenstapel perspektivisch so dargestellt, wie dieser von oben her in einen - hier nicht dargestellten - Druckerschacht eines für das Bedrucken der Kassetten geeigneten Druckers eingeführt wird. Der Kassettenstapel besteht aus einzelnen Kassetten 2 zur Aufnahme von Präparaten für Laboranalysen, wobei gemäß einer ersten Ausführungsform alle Kassetten 2 mit einer ersten Öffnung 7 versehen sind, durch die ein gemeinsamer Strang 8 hindurchführt, um die Kassetten 2 in Stapelform zusammenzuhalten. Der aus einem elastisch biegsamen Bandmaterial bestehende Strang 8 ist innerhalb des Kassettenstapels zwar durch sämtliche Kassetten 2 hindurchgeführt, ohne dass jedoch die einzelnen Kassetten in Stranglängsrichtung an dem Strang 8 befestigt sind.

Jede Kassette 2 ist jeweils durch einen Deckel 10 verschlossen im Kassettenstapel angeordnet, wobei die Kassetten 2 und die dazugehörigen Deckel 10 vorliegend aus labortechnischen Gründen jeweils perforiert sind. Die Betätigung und Führung des Deckels 10 an der Kassette 2 bzw. das Öffnen und Schließen der Kassette 2 mittels des Deckels 10 wird nachfolgend anhand von vier Ausführungsbeispielen näher beschrieben.

Gemäß Figur 2 ist der untere Teil des Kassettenstapels nach Figur 1 perspektivisch gezeigt. Die einzelnen Kassetten 2 weisen jeweils einen rechteckigen, perforierten Boden 3 und vier jeweils geschlossene Seitenwände 4a, 4b, 4c, 4d auf, von denen die erste Seitenwand 4a eine Doppelwand 5 ist. Die Perforationen des Bodens 3 der Kassette 2 können Löcher oder andere Durchbrüche oder Durchgangsöffnungen beliebiger Form und Anzahl sein.

Die Doppelwand 5 weist eine Innenwand 5a und eine Außenwand 5b auf, wobei die Außenwand 5b das in Figur 1 gezeigte Beschriftungsfeld 6 aufweist. Während die Innenwand 5a rechtwinklig zum Boden 3 angeordnet und direkt mit diesem verbunden ist, verläuft die Außenwand 5b schräg in einem Winkel auf den oberen Rand der Innenwand 5a zu und ist dort über einen Teil dessen Breite mit der Innenwand 5a verbunden.

Dort wo sich die Innenwand 5a und die Außenwand 5b V-förmig treffen, ist auf der Mitte der Breite der Kassette 2 die schlitzförmige erste Öffnung 7 zum Hindurchführen des Stranges 8 angeordnet. Die Länge und Breite der ersten Öffnung 7 korrespondiert dabei mit dem entsprechenden Querschnitt des als Flachband ausgebildeten Stranges 8.

Der Strang 8 weist unter der untersten Kassette 2 des Kassettenstapels ein Widerstandselement 9 auf, das als abgewinkelter Endabschnitt des Strangs 8 ausgestaltet ist, der sich unterhalb des Bodens 3 der untersten Kassette 2 des Kassettenstapels befindet, und von unten her gegen diesen Boden 3 abgestützt ist. Mithin ist der Strang 8 unterhalb der untersten Kassette 2 an einer Abwinklung 22 rechtwinklig abgeknickt, so dass der abgewinkelte Längsabschnitt das quer zu dem übrigen Strang 8 angeordnete Widerstandselement 9 bildet.

Die Abwinklung 22 des aus Kunststoff bestehenden Stranges 8 weist eine derartige Steifigkeit auf, dass sie die Gewichtskraft der auf dem Strang 8 aufgefädelten Kassetten 2 ohne größere Verformung aufnehmen kann. Wird jedoch nach dem Absenken des Stapels in den Druckerschacht 4 durch Ziehen an einer in Figur 1 gezeigten Schlaufe 20 ein gewisser zusätzlicher Druck auf die Abwinklung ausgeübt, gibt die Abwinklung 22 so stark nach, dass nach Überwinden dieses anfänglichen Widerstands der Strang 8 nach oben hin aus den Kassetten 2 herausgezogen werden kann, sodass die Kassetten 2 unabhängig voneinander übereinander gestapelt im Druckschacht liegen. Der zusätzliche Druck wird durch Ziehen an der Schlaufe 20 des Stranges 8 nach oben, unter gleichzeitigem Druck nach unten auf die oberste Kassette 2 des Kassettenstapels erzeugt. Je nach Beschaffenheit der Kassetten 2 bzw. deren Anzahl innerhalb eines als Ganzes einzuführenden Kassettenstapels können die Geometrien, d. h. insbesondere die Breite der ersten Öffnung 7 und die Länge des abgewinkelten Endabschnitts des Stranges 8, aufeinander abgestimmt werden.

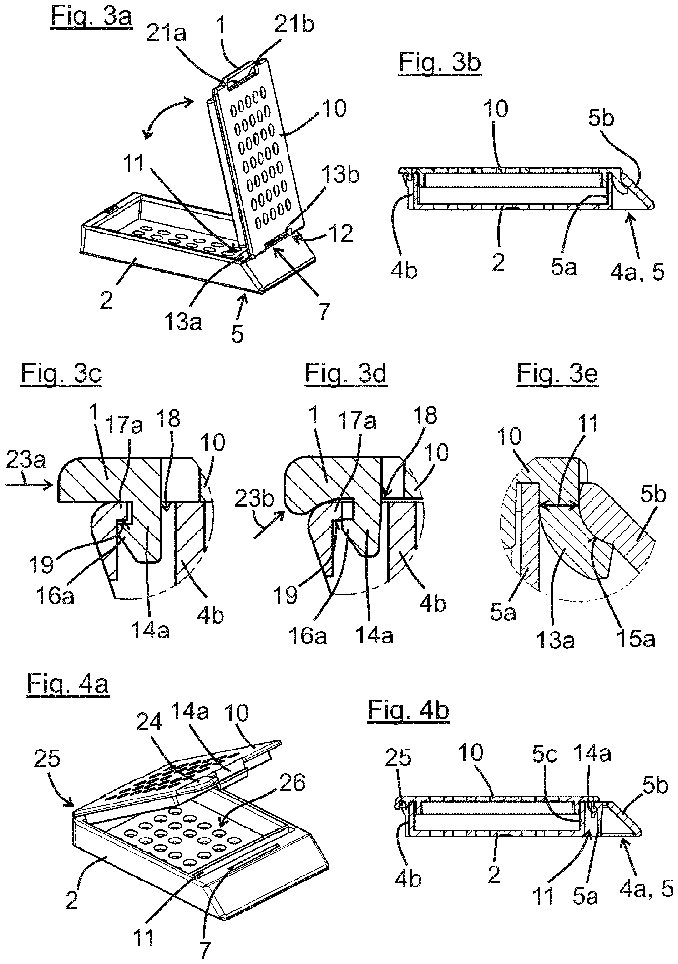

Die Figuren 3a bis 3e zeigen eine erste Ausführungsform einer einzelnen Kassette 2 des Kassettenstapels. Figur 3a stellt die Kassette 2 mit dem daran angeordneten Deckel 10 im geöffneten Zustand dar, wobei der Deckel 10 an der Doppelwand 5 gelenkig gelagert ist und in einer Schwenkbewegung relativ zur Kassette 2 zwischen einer horizontalen Stellung, bei der die Kassette 2 verschlossen ist, und einer hier dargestellten geöffneten Stellung geführt ist.

An der Doppelwand 5 ist eine zweite und dritte Öffnung 11, 12 ausgebildet, wobei diese Öffnungen hier durch den Deckel 10 verdeckt sind. Die zweite und dritte Öffnung 11, 12 nehmen jeweils eine an dem Deckel 10 angeformte Lasche 13a, 13b auf und führen diese bei der Schwenkbewegung des Deckels 10. Mithin ist der Deckel 10 über die Laschen 13a, 13b gelenkig an der Kassette 2 angeordnet.

Die erste Öffnung 7 zur Aufnahme des Stranges 8 ist zwischen der zweiten und dritten Öffnung 11, 12 ausgebildet. Der Deckel 10 ist derart ausgebildet, dass der in Figur 1 gezeigte Strang 8 zwar bei geschlossenem Deckel 10, hingegen nicht bei unverschlossenem, schräg angelenktem Deckel 10 durch die erste Öffnung 7 hindurchgeführt werden kann bzw. hindurchführt.

In Figur 3b ist die Kassette 2 im geschlossenen Zustand als Schnittansicht dargestellt. Der Deckel 10 ist, wie bereits beschrieben, im Bereich der Doppelwand 5 bzw. ersten Seitenwand 4a aufgenommen und geführt, und ist an der der Doppelwand 5 gegenüberliegenden zweiten Seitenwand 4b derart aufgenommen, dass eine lösbare form- und kraftschlüssige Verbindung zwischen dem Deckel 10 und der Kassette 2 vorliegt.

In Figur 3c ist die form- und kraftschlüssige Verbindung zwischen dem Deckel 10 und der Kassette 2 detailliert dargestellt. Am Deckel 10 ist ein hakenförmiges Rastelement 14a ausgebildet, das nach dem Snap-Lock-Prinzip in eine Rastöffnung 18 an der zweiten Seitenwand 4b eingreift und mit einer am Rastelement 14a angeordneten Rastkontur 16a an einem Hinterschnitt 19 eines an der zweiten Seitenwand 4b ausgebildeten Rastabschnitts 17a zur Anlage kommt. Somit nimmt die Rastöffnung 18 das Rastelement 14a sowie die Rastkontur 16a im geschlossenen Zustand der Kassette 2 auf. Mithin ist die Rastöffnung 18 im Querschnitt breiter ausgebildet, als die breiteste Stelle der Rastkontur 16a.

Das Rastelement 14a befindet sich an einem Bügel 1, der parallel zur zweiten Seitenwand 4b ausgebildet ist. Wie in Figur 3a klar zu sehen ist, ist der Bügel 1 an seinen zwei Enden durch jeweils einen materialverjüngten und dadurch elastisch nachgiebig gestalteten Übergangsabschnitt 21a, 21b mit dem übrigen Deckel 10 verbunden.

Das Lösen der form- und kraftschlüssigen Verbindung des Deckels 10 von der Kassette 2 erfolgt durch ein manuelles oder händisches Betätigen des Bügels 1, wobei der Bügel 1 dazu in eine erste Betätigungsrichtung 23a horizontal bewegt wird. Dabei verformen die nachgiebig geformten Übergangsabschnitte 21a, 21b des Bügels 1 elastisch, sodass die Rastkontur 16a des Rastelements 14a aus dem Hinterschnitt 19 heraustritt, und der Deckel 10 geöffnet werden kann. Mithin erfolgt die Betätigung des Bügels 1 mit einer horizontalen und einer vertikalen Kraftkomponente. Nach einer Betätigung verlagert der Bügel 1 zurück in dessen Ausgangsposition.

Figur 3d beschreibt eine alternative Querschnittsform, die im Wesentlichen analog zu jener nach Figur 3c ausgebildet ist. Der einzige Unterschied ist, dass der Bügel 1 an dessen Außenkante eine gebogene Außenform aufweist, die eine vorteilhafte Haptik bereitstellt. Mit anderen Worten erfolgt die Betätigung des Bügels 1 intuitiv von schräg unten in einer weiteren Betätigungsrichtung 23b, sodass nach Lösen der form- und kraftschlüssigen Verbindung zwischen dem Deckel 10 und der Kassette 2 ein vertikales Abheben des Deckels 10 von der zweiten Seitenwand 4b zur Einleitung der Schwenkbewegung initiiert wird.

In Figur 3e ist die Führung des Deckels 10 an der Kassette 2 in einem detaillierten Teilquerschnitt dargestellt. Zwischen der Innenwand 5a und der Außenwand 5b der Doppelwand 5 sind die zweite und dritte Öffnung 11, 12 ausgebildet, die je eine der am Deckel 10 einstückig angeformten Laschen 13a, 13b aufnehmen, und bei der Schwenkbewegung des Deckels 10 führen. Aufgrund der Schnittebene ist hier lediglich die erste Lasche 13a gezeigt, die in der zweiten Öffnung 11 geführt ist. Anders gesagt werden die Laschen 13a, 13b durch die zweite und dritte Öffnung 11, 12 hindurchgeführt.

An der Außenwand 5b ist eine zur ersten Lasche 13a korrespondierend gestaltete Gleitfläche 15a ausgebildet, wobei die erste Lasche 13a und die erste Gleitfläche 15a zueinander korrespondierende Bogenkonturen aufweisen. Vorliegend weist die erste Lasche 13 außenwandseitig eine konkave Bogenkontur und die erste Gleitfläche 15a laschenseitig eine konvexe Bogenkontur auf. Analog dazu ist die - hier nicht gezeigte - zweite Lasche 13b ausgebildet, die in der dritten Öffnung 12 aufgenommen und an der dazu korrespondierenden zweiten Gleitfläche 15b geführt ist.

In einer Schwenkbewegung des Deckels 10 gleitet die erste Lasche 13a an der Gleitfläche 15a der Außenwand 5b ab. Der Deckel 10 kann vollständig von der Kassette 2 gelöst werden, indem der Deckel 10 soweit aufgeschwenkt wird, bis die Laschen 13a, 13b aus der dazugehörigen Öffnung 11, 12 austreten und ganz herausgezogen werden können.

Die Figuren 4a bis 4c zeigen eine dritte Ausführungsform einer der Kassetten 2 des Kassettenstapels. Die Kassette und deren Deckel 10 sind derart ausgebildet, dass der in Figur 1 gezeigte Strang 8 nicht nur bei unverschlossenem Deckel 10, zum Beispiel bei schräg angelenktem Deckel, sondern ebenso bei vollständig geschlossenem Deckel 10 durch die erste Öffnung 7 hindurchgeführt werden kann bzw. hindurchführt.

Figur 4a zeigt die Kassette 2 mit dem daran angeordneten Deckel 10 im leicht geöffneten Zustand. Der Deckel 10 kann wie dargestellt über ein Gelenk 25 mit der der Doppelwand 5 gegenüberliegenden zweiten Seitenwand 4b der Kassette 2 verbunden sein, oder die Verbindung zwischen Kassette 2 und Deckel 10 erfolgt über ein Filmscharnier oder eine Sollbruchstelle. Zum Verschließen der Kassette 2 greift der Deckel 10 auf seiner dem Gelenk 25 abgewandten Seite nach dem Snap-Lock-Prinzip mittels eines hakenförmigen Rastelements 14a in eine zweite Öffnung 11 ein. Die zweite Öffnung 11 ist vorliegend zwischen einem Kassetteninnenraum 26 und der ersten Öffnung 7 ausgebildet. Der Deckel 10 ist derart ausgebildet, dass der in Figur 1 gezeigte Strang 8 auch bei geschlossener Kassette 2 ungehindert durch die erste Öffnung 7 hindurchführt.

In Figur 4b ist ein Längsschnitt der Kassette 2 im geschlossenen Zustand dargestellt. Der Deckel 10 ist im Bereich der zweiten Seitenwand 4b durch das Gelenk 25 gelenkig gelagert und ist an der Doppelwand 5 bzw. der ersten Seitenwand 4a derart aufgenommen, dass eine lösbare form- und kraftschlüssige Verbindung zwischen dem Deckel 10 und der Kassette 2 vorliegt. Die Kassette 2 weist einwärts der Doppelwand 5 eine weitere Innenwand 5c auf, wobei die erste Innenwand 5a zwischen der Außenwand 5b und der weiteren Innenwand 5c angeordnet ist. Die zweite Öffnung 11 ist zur Aufnahme des Rastelements 14a des Deckels 10 zwischen der ersten und der weiteren Innenwand 5a, 5c angeordnet.

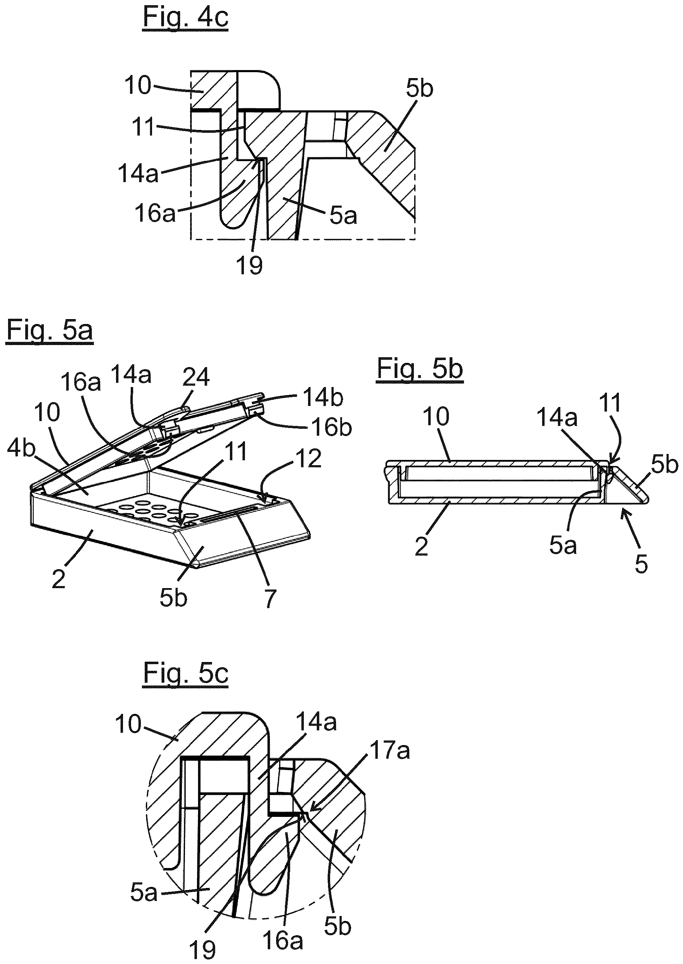

Nach Figur 4c, in einer vergrößerten Detailschnittdarstellung des Längsschnitts gemäß Figur 4b, kommt das Rastelement 14a mit einer Rastkontur 16a an einem Hinterschnitt 19 eines an der der Außenwand 5b abgewandten Seite der ersten Innenwand 5a ausgebildeten Rastabschnitts 17a zur Anlage und erzeugt die form- und kraftschlüssige Verbindung zwischen dem Deckel 10 und der Kassette 2. Durch eine vertikal oder schräg nach oben erfolgende manuelle Betätigung einer Öffnungslasche 24, die gemäß Figur 4a an einer dem Gelenk 25 abgewandten Seite des Deckels 10 angeordnet ist, wird das Rastelement 14a mit der Rastkontur 16a elastisch verformt, sodass die Rastkontur 16a im Wesentlichen horizontal aus dem Hinterschnitt 19 herausgleitet und ein vertikales Anheben des Deckels 10 von der Doppelwand 5 freigibt.

Die Figuren 5a bis 5c zeigen eine vierte Ausführungsform einer der Kassetten 2 des Kassettenstapels. Die Kassette 2 und der Deckel 10 sind derart ausgebildet, dass der in Figur 1 gezeigte Strang 8 nicht nur bei unverschlossenem Deckel 10, zum Beispiel bei schräg angelenktem Deckel 10, sondern ebenso bei vollständig geschlossenem Deckel 10 durch die erste Öffnung 7 hindurchgeführt werden kann bzw. hindurchführt.

Figur 5a zeigt die Kassette 2 mit dem daran angeordneten Deckel 10 im leicht geöffneten Zustand. Der Deckel 10 kann analog zu der Ausführungsform gemäß Figur 4a über ein - hier nicht dargestelltes - Gelenk mit der der Doppelwand 5 gegenüberliegenden zweiten Seitenwand 4b der Kassette 2 verbunden sein. Die Doppelwand 5 weist eine zweite und dritte Öffnung 11, 12 auf, die vorliegend als Aussparungen ausgebildet sind und je ein am Deckel 10 angeordnetes erstes und zweites Rastelement 14a, 14b mit einer jeweiligen ersten und zweiten Rastkontur 16a, 16b zur form- und kraftschlüssigen Verbindung des Deckels 10 mit der Kassette 2 aufnehmen. Die erste Öffnung 7 ist vorliegend zwischen der zweiten und dritten Öffnung 11, 12 ausgebildet, wobei alle drei Öffnungen 7, 11, 12 zwischen der Innenwand 5a und der Außenwand 5b angeordnet sind. Der Deckel 10 ist derart ausgebildet, dass der in Figur 1 gezeigte Strang 8 auch im geschlossenen Zustand der Kassette 2 ungehindert durch die erste Öffnung 7 hindurchgeführt werden kann. Zum Verschließen der Kassette 2 greift der Deckel 10 auf seiner dem Gelenk abgewandten Seite nach dem Snap-Lock-Prinzip mittels der hakenförmigen Rastelemente 14a, 14b in die zweite bzw. dritte Öffnung 11, 12 ein.

In Figur 5b ist ein Längsschnitt der Kassette 2 im geschlossenen Zustand dargestellt. Der Deckel 10 ist nach der zuvor beschriebenen Art im Bereich der zweiten Seitenwand 4b durch das Gelenk 25 gelenkig gelagert und ist ferner an der Doppelwand 5 derart aufgenommen, dass eine lösbare form- und kraftschlüssige Verbindung zwischen dem Deckel 10 und der Kassette 2 vorliegt. Die hakenförmigen Rastelemente 14a, 14b ragen zwischen der Innenwand 5a und der Außenwand 5b in die jeweilige Öffnung 11, 12 hinein und verrasten an der Außenwand 5b. Aus perspektivischen Gründen ist hier lediglich das erste Rastelement 14a dargestellt, das in die zweite Öffnung 11 hineinragt. Das zweite Rastelement 14b ist analog dazu ausgebildet.

Nach Figur 5c, einer Detaillschnittdarstellung des Längsschnitts gemäß Figur 5b, kommt das erste Rastelement 14a mit der ersten Rastkontur 16a an einem Hinterschnitt 19 eines an der der Innenwand 5a zugewandten Seite der Außenwand 5b ausgebildeten Rastabschnitts 17a zur Anlage und erzeugt die form- und kraftschlüssige Verbindung zwischen dem Deckel 10 und der Kassette 2. Durch eine manuelle Betätigung einer in Figur 5a gezeigten Öffnungslasche 24, die an einer dem Gelenk 25 abgewandten Seite des Deckels 10 angeordnet ist, wird das erste Rastelement 14a mit der ersten Rastkontur 16a derart elastisch verformt, dass die Rastkontur 16a im Wesentlichen horizontal aus dem Hinterschnitt 19 herausgleitet und ein vertikales Anheben des Deckels 10 von der Doppelwand 5 ermöglicht bzw. freigibt. Analog dazu kommt das - hier nicht dargestellte - zweite Rastelement 14b mit der zweiten Rastkontur 16b an einem Hinterschnitt 19 eines weiteren an der der Innenwand 5a zugewandten Seite der Außenwand 5b ausgebildeten Rastabschnitts 17b zur Anlage.

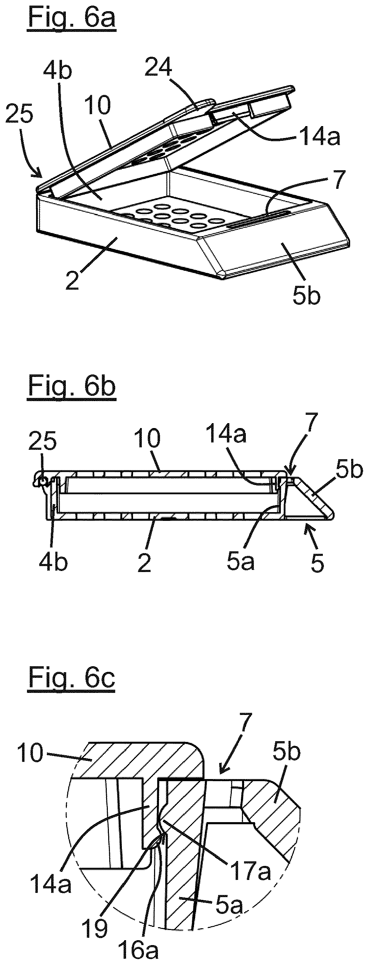

In den Figuren 6a bis 6c ist eine fünfte Ausführungsform einer der Kassetten 2 des Kassettenstapels dargestellt. Die Kassette 2 und der Deckel 10 sind derart ausgebildet, dass der in Figur 1 gezeigte Strang 8 nicht nur bei unverschlossenem Deckel 10, zum Beispiel bei schräg angelenktem Deckel wie in Fig. 6a, sondern ebenso bei vollständig geschlossenem Deckel 10 durch die erste Öffnung 7 hindurchgeführt werden kann bzw. hindurchführt.

Figur 6a zeigt die Kassette 2 mit dem daran angeordneten Deckel 10 im geöffneten Zustand. Der Deckel 10 ist analog zu der Ausführungsform gemäß Figur 4a über ein Gelenk 25 mit der der Doppelwand 5 gegenüberliegenden zweiten Seitenwand 4b der Kassette 2 verbunden. An der dem Gelenk 25 abgewandten Seite des Deckels 10 ist ein Rastelement 14a ausgebildet, das an der Kassette 2 verrastbar ist, um den Deckel 10 form- und kraftschlüssig mit der Kassette 2 zu verbinden.

Nach Figur 6b ist ein Längsschnitt der Kassette 2 im geschlossenen Zustand dargestellt. Der Deckel 10 greift zum Verschließen der Kassette 2 auf seiner dem Gelenk 25 abgewandten Seite nach dem Snap-Lock-Prinzip mittels des hakenförmigen Rastelements 14a in den Kassetteninnenraum 26 ein und kommt an der der Außenwand 5b abgewandten Seite der Innenwand 5a verrastend zur Anlage. Der Deckel 10 ist derart ausgebildet, dass der in Figur 1 gezeigte Strang 8 auch im geschlossenen Zustand der Kassette 2 ungehindert durch die erste Öffnung 7 hindurchgeführt werden kann.

Nach Figur 6c, einer Detaillschnittdarstellung des Längsschnitts gemäß Figur 6b, ist am Rastelement 14a eine Rastkontur 16a ausgebildet, die im geschlossenen Zustand der Kassette 2 an einem Hinterschnitt 19 eines an der der Außenwand 5b zugewandten Seite der Innenwand 5a ausgebildeten Rastabschnitts 17a zur Anlage kommt und die form- und kraftschlüssige Verbindung zwischen dem Deckel 10 und der Kassette 2 erzeugt. Durch eine manuelle Betätigung einer in Figur 6a gezeigten Öffnungslasche 24, die an einer dem Gelenk 25 abgewandten Seite des Deckels 10 angeordnet ist, wird das erste Rastelement 14a mit der Rastkontur 16a derart elastisch verformt, dass die Rastkontur 16a aus dem Hinterschnitt 19 herausgleitet und ein vertikales Anheben des Deckels 10 von der Doppelwand 5 ermöglicht bzw. freigibt.

Allen beschriebenen Ausführungsformen gemeinsam ist die Möglichkeit, dass bei Bedarf der die Kassetten 2 des Kassettenstapels zusammenhaltende Strang 8 bei vollständig geschlossenen Kassetten 2 durch deren erste Öffnungen 7 hindurchgeführt werden kann. Dadurch lässt sich, in Abhängigkeit von labortechnischen Vorgaben, die Handhabung des Kassettenstapels verbessern, etwa im Rahmen der Arbeitsvorbereitung in einem stark automatisiert ablaufenden Laborbetrieb.

### Bezugszeichenliste

- 1: Bügel
- 2: Kassette
- 3: Boden
- 4a, 4b, 4c, 4d: Seitenwand
- 5: Doppelwand
- 5a: erste Innenwand
- 5b: Außenwand
- 5c: zweite Innenwand
- 6: Beschriftungsfeld
- 7: erste Öffnung
- 8: Strang
- 9: Widerstandselement
- 10: Deckel
- 11: zweite Öffnung
- 12: dritte Öffnung
- 13a, 13b: Lasche
- 14a: Rastelement
- 15a, 15b: Gleitfläche
- 16a, 16b: Rastkontur
- 17a, 17b: Rastabschnitt
- 18: Rastöffnung
- 19: Hinterschnitt
- 20: Schlaufe
- 21a, 21b: Übergangsabschnitt
- 22: Abwinklung
- 23a, 23b: Betätigungsrichtung
- 24: Öffnungslasche
- 25: Gelenk
- 26: Kassetteninnenraum

## Patentansprüche

1. Kassettenstapel aus einzelnen Kassetten (2), vorzugsweise zur Aufnahme von Präparaten für Laboranalysen, wobei die einzelnen Kassetten (2) jeweils einen rechteckigen Boden (3) und vier Seitenwände (4a, 4b, 4c, 4d) aufweisen, von denen eine erste Seitenwand (4a) eine Doppelwand (5) ist und ein bedruckbares Beschriftungsfeld (6) aufweist, wobei alle Kassetten (2) mit einer ersten Öffnung (7) versehen sind, durch die ein gemeinsamer Strang (8) hindurchführt, um die Kassetten (2) in Stapelform zusammenzuhalten, wobei die erste Öffnung (7) zwischen einer Innenwand (5a) und einer das bedruckbare Beschriftungsfeld (6) aufweisenden Außenwand (5b) der Doppelwand (5) ausgebildet ist, und wobei der Strang (8) unter der untersten Kassette (2) des Kassettenstapeis ein Widerstandselement (9) aufweist, **dadurch gekennzeichnet, dass** zwischen der Innenwand (5a) und der Außenwand (5b) der Doppelwand (5) eine zweite und dritte Öffnung (11, 12) ausgebildet sind, die jeweils eine an einem Deckel (10) angeformte Lasche (13a, 13b) aufnehmen und bei einer Schwenkbewegung des Deckels (10) führen, wobei an der der Doppelwand (5) gegenüberliegenden zweiten Seitenwand (4b) ein Rastabschnitt (17a) ausgebildet ist, und an dem Deckel (10) ein Rastelement (14a) ausgebildet ist, welches am Rastabschnitt (17a) zur formschlüssigen Verbindung des Deckels (10) mit der Kassette (2) zur Anlage kommt.

2. Kassettenstapel nach Anspruch 1, **dadurch gekennzeichnet, dass** die Kassetten (2) jeweils durch einen jeweiligen Deckel (10) verschlossen im Kassettenstapel angeordnet sind.

3. Kassettenstapel nach Anspruch 1 oder 2, **dadurch gekennzeichnet, dass** an der Außenwand (5b) der Doppelwand (5) eine zur jeweiligen Lasche (13a, 13b) korrespondierend gestaltete Gleitfläche (15a, 15b) ausgebildet ist.

4. Kassettenstapel nach Anspruch 3, **dadurch gekennzeichnet, dass** die beiden Laschen (13a, 13b) und die dazugehörigen Gleitflächen (15a, 15b) eine korrespondierende Bogenkontur aufweisen.

5. Kassettenstapel nach einem der vorangehenden Ansprüche, **dadurch gekennzeichnet, dass** das Rastelement (14a) eine Rastkontur (16a) aufweist, die an einem Hinterschnitt (19) des Rastabschnitts (17a) zur Anlage kommt.

6. Kassettenstapel nach Anspruch 5, **dadurch gekennzeichnet, dass** an der der Doppelwand (5) gegenüberliegenden zweiten Seitenwand (4b) eine Rastöffnung (18) ausgebildet ist, die das Rastelement (14a) mit der Rastkontur (16a) aufnimmt.

7. Kassettenstapel nach einem der vorangehenden Ansprüche, **dadurch gekennzeichnet, dass** die erste Öffnung (7) zwischen der zweiten und dritten Öffnung (11, 12) ausgebildet ist.

8. Kassettenstapel nach einem der vorangehenden Ansprüche, **dadurch gekennzeichnet, dass** das Rastelement (14a) mit einem quer zur Längsrichtung des Deckels (10) ausgerichteten Bügel (1) verbunden ist, der beiderends durch einen ersten und zweiten materialverjüngten Übergangsabschnitt (21a, 21b) mit dem Deckel (10) verbunden ist.

9. Kassettenstapel aus einzelnen Kassetten (2), vorzugsweise zur Aufnahme von Präparaten für Laboranalysen, wobei die einzelnen Kassetten (2) jeweils einen rechteckigen Boden (3) und vier Seitenwände (4a, 4b, 4c, 4d) aufweisen, von denen eine Seitenwand (4a) eine Doppelwand (5) ist und ein bedruckbares Beschriftungsfeld (6) aufweist, wobei alle Kassetten (2) mit einer ersten Öffnung (7) versehen sind, durch die ein gemeinsamer Strang (8) hindurchführt, um die Kassetten (2) in Stapelform zusammenzuhalten, wobei die erste Öffnung (7) zwischen einer ersten Innenwand (5a) und einer das bedruckbare Beschriftungsfeld (6) aufweisenden Außenwand (5b) der Doppelwand (5) ausgebildet ist, und wobei der Strang (8) unter der untersten Kassette (2) des Kassettenstapels ein Widerstandselement (9) aufweist, **dadurch gekennzeichnet, dass** jede Kassette (2) im Bereich der ersten Innenwand (5a) mit zumindest einer zweiten Öffnung (11) versehen ist, wobei an der ersten Innenwand (5a) oder der Außenwand (5b) der Doppelwand (5) ein Rastabschnitt (17a) ausgebildet ist, und wobei ein Deckel (10) vorgesehen ist, an dem ein Rastelement (14a) ausgebildet ist, das in der zweiten Öffnung (11) aufgenommen ist und an dem Rastabschnitt (17a) zur formschlüssigen Verbindung des Deckels (10) mit der Kassette (2) zur Anlage kommt.

10. Kassettenstapel nach Anspruch 9, **dadurch gekennzeichnet, dass** die Kassetten (2) jeweils durch einen jeweiligen Deckel (10) verschlossen im Kassettenstapel angeordnet sind.

11. Kassettenstapel nach Anspruch 9 oder 10, **dadurch gekennzeichnet, dass** das Rastelement (14a) eine Rastkontur (16a) aufweist, die an einem Hinterschnitt (19) des Rastabschnitts (17a) zur Anlage kommt.

12. Kassettenstapel nach einem der Ansprüche 9 bis 11, **dadurch gekennzeichnet, dass** die Kassette (2) einwärts der Doppelwand (5) eine weitere Innenwand (5c) aufweist, wobei die erste Innenwand (5a) zwischen der Außenwand (5b) und der weiteren Innenwand (5c) angeordnet ist.

13. Kassettenstapel nach Anspruch 12, **dadurch gekennzeichnet, dass** die zweite Öffnung (11) zur Aufnahme des dazugehörigen Rastelements (14a) zwischen der ersten und weiteren Innenwand (5a, 5c) angeordnet ist.

14. Kassettenstapel nach Anspruch 12, **dadurch gekennzeichnet, dass** der Rastabschnitt (17a) an der der Außenwand abgewandten Seite der ersten Innenwand (5a) ausgebildet ist.

15. Kassettenstapel nach einem der Ansprüche 9 bis 11, **dadurch gekennzeichnet, dass** die Kassette (2) ferner eine dritte Öffnung (12) umfasst, wobei die erste Öffnung (7) zwischen der zweiten und dritten Öffnung (11, 12) angeordnet ist, wobei am Deckel (10) ein weiteres Rastelement (14b) ausgebildet ist, welches im Bereich der dritten Öffnung (12) an einem weiteren Rastabschnitt (17b) zur formschlüssigen Verbindung des Deckels (10) mit der Kassette (2) zur Anlage kommt.

16. Kassettenstapel nach Anspruch 15, **dadurch gekennzeichnet, dass** die beiden Rastabschnitt (17a, 17b) an der der ersten Innenwand (5a) zugewandten Seite der Außenwand (5b) angeordnet sind.

17. Kassettenstapel aus einzelnen Kassetten (2), vorzugsweise zur Aufnahme von Präparaten für Laboranalysen, wobei die einzelnen Kassetten (2) jeweils einen rechteckigen Boden (3) und vier Seitenwände (4a, 4b, 4c, 4d) aufweisen, von denen eine Seitenwand (4a) eine Doppelwand (5) ist und ein bedruckbares Beschriftungsfeld (6) aufweist, wobei alle Kassetten (2) mit einer ersten Öffnung (7) versehen sind, durch die ein gemeinsamer Strang (8) hindurchführt, um die Kassetten (2) in Stapelform zusammenzuhalten, wobei die erste Öffnung (7) zwischen einer Innenwand (5a) und einer das bedruckbare Beschriftungsfeld (6) aufweisenden Außenwand (5b) der Doppelwand (5) ausgebildet ist, und wobei der Strang (8) unter der untersten Kassette (2) des Kassettenstapels ein Widerstandselement (9) aufweist, **dadurch gekennzeichnet, dass** die Innenwand (5a) an ihrer der Außenwand (5b) abgewandten Seite einen Rastabschnitt (17a) aufweist, an dem ein an einem Deckel (10) ausgebildetes Rastelement (14a) zur Anlage kommt, um den Deckel (10) formschlüssig mit der Kassette (2) zu verbinden.

18. Kassettenstapel nach Anspruch 17, **dadurch gekennzeichnet, dass** die Kassetten (2) jeweils durch einen jeweiligen Deckel (10) verschlossen im Kassettenstapel angeordnet sind.

## Claims

1. Cassette stack composed of individual cassettes (2), preferably for receiving preparations for laboratory analyses, wherein the individual cassettes (2) each have a rectangular base (3) and four side walls (4a, 4b, 4c, 4d), of which a first side wall (4a) is a double wall (5) and has a printable inscription field (6), wherein all the cassettes (2) are provided with a first opening (7) through which a common cord (8) runs in order to hold the cassettes (2) together in stack form, wherein the first opening (7) is formed between an inner wall (5a) and an outer wall (5b) of the double wall (5), the outer wall (5b) having the printable inscription field (6), and wherein the cord (8) has a resistance element (9) under the lowest cassette (2) of the cassette stack, **characterized in that** a second and third opening (11, 12) are formed between the inner wall (5a) and the outer wall (5b) of the double wall (5), which second and third opening (11, 12) each receive a tab (13a, 13b) integrally formed on a lid (10) and guide the tab (13a, 13b) in a pivoting movement of the cover (10), wherein a latching portion (17a) is formed on the second side wall (4b) opposite the double wall (5), and a latching element (14a) is formed on the lid (10) and comes to bear on the latching portion (17a) for the form-fit connection of the lid (10) to the cassette (2) .

2. Cassette stack according to Claim 1, **characterized in that** the cassettes (2) are each arranged in the cassette stack in a manner closed by a respective lid (10).

3. Cassette stack according to Claim 1 or 2, **characterized in that** a slide surface (15a, 15b) configured to match the respective tab (13a, 13b) is formed on the outer wall (5b) of the double wall (5) .

4. Cassette stack according to Claim 3, **characterized in that** the two tabs (13a, 13b) and the associated slide surfaces (15a, 15b) have a corresponding arc contour.

5. Cassette stack according to one of the preceding claims, **characterized in that** the latching element (14a) has a latching contour (16a) which comes to bear on an undercut (19) of the latching portion (17a) .

6. Cassette stack according to Claim 5, **characterized in that** a latching opening (18) is formed on the second side wall (4b) opposite the double wall (5) and receives the latching element (14a) with the latching contour (16a).

7. Cassette stack according to one of the preceding claims, **characterized in that** the first opening (7) is formed between the second and third opening (11, 12) .

8. Cassette stack according to one of the preceding claims, **characterized in that** the latching element (14a) is connected to a clip (1) which is oriented transversely with respect to the longitudinal direction of the lid (10) and which at both ends is connected to the lid (10) by a first and second materially tapered transition portion (21a, 21b).

9. Cassette stack composed of individual cassettes (2), preferably for receiving preparations for laboratory analyses, wherein the individual cassettes (2) each have a rectangular base (3) and four side walls (4a, 4b, 4c, 4d), of which one side wall (4a) is a double wall (5) and has a printable inscription field (6), wherein all the cassettes (2) are provided with a first opening (7) through which a common cord (8) runs in order to hold the cassettes (2) together in stack form, wherein the first opening (7) is formed between a first inner wall (5a) and an outer wall (5b) of the double wall (5), the outer wall (5b) having the printable inscription field (6), and wherein the cord (8) has a resistance element (9) under the lowest cassette (2) of the cassette stack, **characterized in that** each cassette (2) is provided with at least one second opening (11) in the region of the first inner wall (5a), wherein a latching portion (17a) is formed on the first inner wall (5a) or the outer wall (5b) of the double wall (5), and wherein a lid (10) is provided on which a latching element (14a) is formed which is received in the second opening (11) and comes to bear on the latching portion (17a) for the form-fit connection of the lid (10) to the cassette (2).

10. Cassette stack according to Claim 9, **characterized in that** the cassettes (2) are each arranged in the cassette stack in a manner closed by a respective lid (10).

11. Cassette stack according to Claim 9 or 10, **characterized in that** the latching element (14a) has a latching contour (16a) which comes to bear on an undercut (19) of the latching portion (17a).

12. Cassette stack according to one of Claims 9 to 11, **characterized in that** the cassette (2) has, inwards from the double wall (5), a further inner wall (5c), wherein the first inner wall (5a) is arranged between the outer wall (5b) and the further inner wall (5c).

13. Cassette stack according to Claim 12, **characterized in that** the second opening (11) for receiving the associated latching element (14a) is arranged between the first and the further inner wall (5a, 5c) .

14. Cassette stack according to Claim 12, **characterized in that** the latching portion (17a) is formed on the side of the first inner wall (5a) directed away from the outer wall.

15. Cassette stack according to one of Claims 9 to 11, **characterized in that** the cassette (2) moreover comprises a third opening (12), wherein the first opening (7) is arranged between the second and third opening (11, 12), wherein a further latching element (14b) is formed on the lid (10) and, in the region of the third opening (12), comes to bear on a further latching portion (17b) for the form-fit connection of the lid (10) to the cassette (2).

16. Cassette stack according to Claim 15, **characterized in that** the two latching portions (17a, 17b) are arranged on the side of the outer wall (5b) directed towards the first inner wall (5a).

17. Cassette stack composed of individual cassettes (2), preferably for receiving preparations for laboratory analyses, wherein the individual cassettes (2) each have a rectangular base (3) and four side walls (4a, 4b, 4c, 4d), of which one side wall (4a) is a double wall (5) and has a printable inscription field (6), wherein all the cassettes (2) are provided with a first opening (7) through which a common cord (8) runs in order to hold the cassettes (2) together in stack form, wherein the first opening (7) is formed between an inner wall (5a) and an outer wall (5b) of the double wall (5), the outer wall (5b) having the printable inscription field (6), and wherein the cord (8) has a resistance element (9) under the lowest cassette (2) of the cassette stack, **characterized in that** the inner wall (5a) has, on its side directed away from the outer wall (5b), a latching portion (17a) on which a latching element (14a) formed on a lid (10) comes to bear in order to connect the lid (10) with form-fit engagement to the cassette (2).

18. Cassette stack according to Claim 17, **characterized in that** the cassettes (2) are each arranged in the cassette stack in a manner closed by a respective lid (10).

## Revendications

1. Pile de cassettes constituée de cassettes individuelles (2), de préférence pour recevoir des préparations pour analyses de laboratoire, les cassettes individuelles (2) présentant chacune un fond rectangulaire (3) et quatre parois latérales (4a, 4b, 4c, 4d) dont une première paroi latérale (4a) est une double paroi (5) et présente un champ d'inscriptions (6) pouvant être imprimé, toutes les cassettes (2) étant pourvues d'une première ouverture (7) à travers laquelle est guidé un cordon commun (8) afin de retenir les cassettes (2) sous forme empilée, la première ouverture (7) étant réalisée entre une paroi intérieure (5a) et une paroi extérieure (5b) de la double paroi (5) présentant le champ d'inscriptions (6) pouvant être imprimé, et le cordon (8) présentant un élément de résistance (9) en dessous de la cassette inférieure (2) de la pile de cassettes, **caractérisée en ce qu'entre** la paroi intérieure (5a) et la paroi extérieure (5b) de la double paroi (5) sont réalisées une deuxième et une troisième ouverture (11, 12) qui reçoivent chacune une patte (13a, 13b) façonnée au niveau d'un couvercle (10) et qui guident celle-ci en cas de mouvement de pivotement du couvercle (10), une portion d'encliquetage (17a) étant réalisée au niveau de la deuxième paroi latérale (4b) opposée à la double paroi (5), et un élément d'encliquetage (14a) étant réalisé au niveau du couvercle (10), lequel vient en appui contre la portion d'encliquetage (17a) en vue d'une liaison par engagement par correspondance de formes du couvercle (10) avec la cassette (2).

2. Pile de cassettes selon la revendication 1, **caractérisée en ce que** les cassettes (2) sont chacune disposées dans la pile de cassettes de manière fermée par un couvercle respectif (10).

3. Pile de cassettes selon la revendication 1 ou 2, **caractérisée en ce qu'une** surface de glissement (15a, 15b) configurée de manière correspondant à la patte respective (13a, 13b) est réalisée au niveau de la paroi extérieure (5b) de la double paroi (5).

4. Pile de cassettes selon la revendication 3, **caractérisée en ce que** les deux pattes (13a, 13b) et les surfaces de glissement associées (15a, 15b) présentent un contour courbe correspondant.

5. Pile de cassettes selon l'une quelconque des revendications précédentes, **caractérisée en ce que** l'élément d'encliquetage (14a) présente un contour d'encliquetage (16a) qui vient en appui contre une contre-dépouille (19) de la portion d'encliquetage (17a).

6. Pile de cassettes selon la revendication 5, **caractérisée en ce qu'**une ouverture d'encliquetage (18) est réalisée au niveau de la deuxième paroi latérale (4b) opposée à la double paroi (5), ladite ouverture d'encliquetage recevant l'élément d'encliquetage (14a) avec le contour d'encliquetage (16a).

7. Pile de cassettes selon l'une quelconque des revendications précédentes, **caractérisée en ce que** la première ouverture (7) est réalisée entre la deuxième et la troisième ouverture (11, 12).

8. Pile de cassettes selon l'une quelconque des revendications précédentes, **caractérisée en ce que** l'élément d'encliquetage (14a) est connecté à une anse (1) orientée transversalement à la direction longitudinale du couvercle (10), laquelle est connectée au couvercle (10) aux deux extrémités par une première et une deuxième portion de transition (21a, 21b) présentant un rétrécissement de matière.

9. Pile de cassettes constituée de cassettes individuelles (2), de préférence pour recevoir des préparations pour analyses de laboratoire, les cassettes individuelles (2) présentant chacune un fond rectangulaire (3) et quatre parois latérales (4a, 4b, 4c, 4d) dont une paroi latérale (4a) est une double paroi (5) et présente un champ d'inscriptions (6) pouvant être imprimé, toutes les cassettes (2) étant pourvues d'une première ouverture (7) à travers laquelle est guidé un cordon commun (8) afin de retenir les cassettes (2) sous forme empilée, la première ouverture (7) étant réalisée entre une paroi intérieure (5a) et une paroi extérieure (5b) de la double paroi (5) présentant le champ d'inscriptions (6) pouvant être imprimé, et le cordon (8) présentant un élément de résistance (9) en dessous de la cassette inférieure (2) de la pile de cassettes, **caractérisée en ce que** chaque cassette (2), dans la région de la première paroi intérieure (5a), est pourvue d'au moins une deuxième ouverture (11), une portion d'encliquetage (17a) étant réalisée au niveau de la première paroi intérieure (5a) ou de la paroi extérieure (5b) de la double paroi (5), et un couvercle (10) étant prévu, au niveau duquel est réalisé un élément d'encliquetage (14a) qui est reçu dans la deuxième ouverture (11) et qui vient en appui contre la portion d'encliquetage (17a) en vue d'une liaison par engagement par correspondance de formes du couvercle (10) avec la cassette (2).

10. Pile de cassettes selon la revendication 9, **caractérisée en ce que** les cassettes (2) sont chacune disposées dans la pile de cassettes de manière fermée par un couvercle respectif (10).

11. Pile de cassettes selon la revendication 9 ou 10, **caractérisée en ce que** l'élément d'encliquetage (14a) présente un contour d'encliquetage (16a) qui vient en appui contre une contre-dépouille (19) de la portion d'encliquetage (17a).

12. Pile de cassettes selon l'une quelconque des revendications 9 à 11, **caractérisée en ce que** la cassette (2) présente, vers l'intérieur de la double paroi (5), une paroi intérieure supplémentaire (5c), la première paroi intérieure (5a) étant disposée entre la paroi extérieure (5b) et la paroi intérieure supplémentaire (5c).

13. Pile de cassettes selon la revendication 12, **caractérisée en ce que** la deuxième ouverture (11) est disposée entre la première paroi intérieure et la paroi intérieure supplémentaire (5a, 5c) pour recevoir l'élément d'encliquetage associé (14a).

14. Pile de cassettes selon la revendication 12, **caractérisée en ce que** la portion d'encliquetage (17a) est réalisée au niveau du côté de la première paroi intérieure (5a) opposé à la paroi extérieure.

15. Pile de cassettes selon l'une quelconque des revendications 9 à 11, **caractérisée en ce que** la cassette (2) présente en outre une troisième ouverture (12), la première ouverture (7) étant réalisée entre la deuxième et la troisième ouverture (11, 12), un élément d'encliquetage supplémentaire (14b) étant réalisé au niveau du couvercle (10), lequel vient en appui dans la région de la troisième ouverture (12) contre une portion d'encliquetage supplémentaire (17b) en vue de la liaison par engagement par correspondance de formes du couvercle (10) avec la cassette (2).

16. Pile de cassettes selon la revendication 15, **caractérisée en ce que** les deux portions d'encliquetage (17a, 17b) sont disposées au niveau du côté de la paroi extérieure (5b) tourné vers la première paroi intérieure (5a).

17. Pile de cassettes constituée de cassettes individuelles (2), de préférence pour recevoir des préparations pour analyses de laboratoire, les cassettes individuelles (2) présentant chacune un fond rectangulaire (3) et quatre parois latérales (4a, 4b, 4c, 4d) dont une paroi latérale (4a) est une double paroi (5) et présente un champ d'inscriptions (6) pouvant être imprimé, toutes les cassettes (2) étant pourvues d'une première ouverture (7) à travers laquelle est guidé un cordon commun (8) afin de retenir les cassettes (2) sous forme empilée, la première ouverture (7) étant réalisée entre une paroi intérieure (5a) et une paroi extérieure (5b) de la double paroi (5) présentant le champ d'inscriptions (6) pouvant être imprimé, et le cordon (8) présentant un élément de résistance (9) en dessous de la cassette inférieure (2) de la pile de cassettes, **caractérisée en ce que** la paroi intérieure (5a) présente, au niveau de son côté opposé à la paroi extérieure (5b), une portion d'encliquetage (17a) contre laquelle vient s'appuyer un élément d'encliquetage (14a) réalisé au niveau d'un couvercle (10) afin de relier le couvercle (10) par engagement par correspondance de formes à la cassette (2).

18. Pile de cassettes selon la revendication 17, **caractérisée en ce que** les cassettes (2) sont chacune disposées dans la pile de cassettes de manière fermée par un couvercle respectif (10).
